# EUROPEAN PATENT APPLICATION

(11) **EP 1 911 980 A1**
(43) Date of publication of application: **16.04.2008**
(21) Application number: 06780888.1
(22) Date of filing: 07.07.2006
(51) Int. Cl.: F16B 19/10

(54) **CLIP**

(30) Priority: 29.07.2005 JP 2005220680
(71) Applicant: Daiwa Kasei Industry Co., Ltd., Okazaki-shi, Aichi 444-0004 (JP)
(72) Inventor: KATOH,Makoto, c/o DAIWA KASEI INDUSTRY CO., LTD, Okazaki-shi, Aichi 444-0004 (JP); IWAHARA,Toshio, c/o DAIWA KASEI INDUSTRY CO., LTD, Okazaki-shi, Aichi 444-0004 (JP); KAMIYA,Haruhisa, c/o DAIWA KASEI INDUSTRY CO., LTD, Okazaki-shi, Aichi 444-0004 (JP); OGINO, Tetsuya, c/o DAIWA KASEI INDUSTRY CO., LTD, Okazaki-shi, Aichi 444-0004 (JP); ASANO, Kosei, c/o TOYODA GOSEI CO., LTD, Nishikasugai-gun, Aichi 452-8564 (JP); SHIBATA, Minoru, c/o TOYODA GOSEI CO., LTD, Nishikasugai-gun, Aichi 452-8564 (JP); KATAGIRI, Katsuhiro, c/o TOYODA GOSEI CO., LTD, Nishikasugai-gun, Aichi 452-8564 (JP); SUYAMA, Hiroshi, c/o TOYODA GOSEI CO., LTD, Nishikasugai-gun, Aichi 452-8564 (JP); SAKAKIBARA, Yasuhiro, c/o TOYODA GOSEI CO., LTD, Nishikasugai-gun, Aichi 452-8564 (JP)
(74) Representative: Feldmeier, Jürgen
(86) International application number: PCT/JP2006/313613
(87) International publication number: WO 2007/013283

(57) **Abstract**

In a clip 1, when an inner member 2 and an outer member 3 are locked with each other, a first projection and a second projection 31 of each engagement piece 18 are located in an operation hole 32. When a tool 33 is inserted into the operation hole 32 formed on the inner member 2 in the locked state, engagement of the first projection 19 and an engagement hole 12 is released and the locked state is released. When the tool 33 is pulled from the operation hole 32 in a direction opposite to the inserting direction, the inner member 2 and the outer member 3 are in a provisionally locked state.

## Description

### TECHNICAL FIELD

The present invention relates to a clip for use in attaching an attachment member such as a console box and an instrument panel to an attachment receiving member such as an automobile body. In particular, the present invention relates to a clip that enables attachment of the attachment member to the attachment receiving member in an extremely easy one-touch operation while the inner member and the outer member, which form the clip, are always handled integrally with each other in a provisionally locked state.

### BACKGROUND ART

Conventionally, various kinds of clips have been proposed for use in attaching a console box, instrument panel, and the like to various kinds of panels constituting an automobile body.
For example, there is disclosed a console device to be attached on a floor of a vehicle body in Japanese Unexamined Patent Publication No. 11-70838. In attaching the console device on the floor of the vehicle body, a fitting hole formed on a flange of the console box and a through hole formed on a seat portion are aligned to two fitting holes formed on the floor of the vehicle body, and in this state, a clip comprising an outer member and an inner member is inserted through the holes.

[Patent Document 1] Japanese Unexamined Patent Publication No. 11-70838, paragraphs page 4 in the specification and Fig. 2

In the clip comprising the outer member and inner member described in the Patent Document 1, when the inner member is withdrawn from the outer member, the diameter of the outer member is decreased to enable the clip to be detached from the respective fitting holes of the floor and the flange, the fitting hole of the floor, and the through hole of the seating portion. When the inner member is inserted into the outer member, the diameter of the outer member is enlarged to restrict the clip by the respective fitting holes and through hole, so as to fasten the console box to the floor of the vehicle body.

### DISCLOSURE OF THE INVENTION

When the console box is fastened to the floor of the vehicle body by use of the clip for use in the console device described in the Patent Document 1, after the inner member is pulled upwardly and the clip with the outer member having a reduced diameter is inserted through the through hole of the seating portion, the inner member is required to be pushed from upward and inserted into the outer member so as to enlarge the diameter of the outer member.

To fasten the console box to the floor of the vehicle body, first of all, it is required to take an operation of pulling out the inner member from the outer member, and in this state, inserting the clip through the fitting holes and through holes, and subsequently, to take an operation of inserting the inner member to the outer member by depressing the inner member into the outer member. These operations are much troublesome, and lead to a problem that much time is required for fastening the console box to the floor of the vehicle body.

The present invention has been made to solve the problems described above, and an objective thereof is to provide a clip which enables attachment of the attachment member to the attachment receiving member in an extremely easy one-touch operation in a state where the inner member is always handled integrally with the outer member in a provisionally locked state.

To achieve the above object, a clip as set forth in claim 1 comprises an inner member provided on an attachment member and having a base body and an operation wall extended from an upper wall of the base body, and an outer member having an insertion portion where the operation wall of the inner member is inserted and having an engagement piece which elastically deforms as the operation wall of the inner member is inserted into the insertion portion, wherein the outer member is inserted into an attachment hole of an attachment receiving member and the operation wall of the inner member is inserted into the insertion portion of the outer member such that the engagement piece of the outer member is elastically deformed and the attachment member is attached to the attachment receiving member, the clip is characterized in that: the inner member has an engagement groove formed on the operation wall, an engagement hole formed next to the engagement groove and an operation hole penetrating the upper wall of the base body and being communicated with the engagement hole, wherein the outer member has a projection formed next to the engagement piece, wherein the engagement piece is engaged with the engagement groove in a first state where the operation wall of the inner member is inserted into the insertion portion of the outer member and the engagement piece is engaged with the engagement hole in a second state where the operation wall is further inserted into the insertion portion, and wherein the projection engaged with the engagement hole in the second state is located in the operation hole and is capable of releasing the engagement with the engagement hole if a tool is inserted from the operation hole.

According to the clip as set forth in claim 2, in the clip according to claim 1, a slanted cam portion is formed at one end of the operation wall of the inner member, and the engagement piece does not receive a cam operation due to the slanted cam portion in the first state.
In the clip, as set forth in claim 3, it is preferable that a thin plate portion is formed at a distal end of the slanted cam portion, and the engagement piece contacts the thin plate portion in the first state.

According to the clip as set forth in claim 1, since the engagement piece is engaged with the engagement groove in the first state where the operation wall of the inner member is inserted into the insertion portion of the outer member, the outer member and the inner member which are provided on the attachment member can be always handled integrally with each other.

In the second state where the operation wall is further inserted into the insertion portion from the first state where the engagement piece is engaged with the engagement groove, the engagement piece is engaged with the engagement hole. After the inner member and the outer member which are maintained in the first state are inserted into the attachment hole of the attachment receiving member such that the clip is maintained with respect to the attachment receiving member, the inner member is pressed against the attachment receiving member with the attachment member such that the operation wall is further inserted into the insertion portion of the outer member. This simple operation enables the attachment member to be attached to the attachment receiving member via the outer member and the inner member of the clip.

Further, in the second state where the engagement piece is engaged with the engagement hole of the inner member, the engagement piece formed on the outer member penetrates through the upper wall of the base body of the inner member and enters the operation hole which is communicated with the engagement hole and the engagement of the engagement piece and the engagement hole can be released via the tool which is inserted from the operation hole. This enables the attachment member to be detached from the attachment receiving member with an extremely simple operation.

According to the clip as set forth in claim 2, since the engagement piece of the outer member does not receive the cam operation due to the slanted cam portion formed on one end of the operation wall in the first state, the engagement piece is not elastically deformed. Therefore, the elastic force of the engagement piece is surely prevented from reducing while the clip maintains the outer member and the inner member integrally with each other.

### BRIEF DESCRIPTION OF THE DRAWINGS

[Fig. 1] an exploded perspective view schematically showing an inner member and an outer member, which form a clip according to this embodiment
[Fig. 2A] a plane view showing the inner member
[Fig. 2B] a cross-sectional view showing the inner member taken along the arrow A-A of Fig. 2A
[Fig. 2C] a cross-sectional view showing the inner member taken along the arrow B-B of Fig. 2A
[Fig. 3A] a plane view showing the outer member
[Fig. 3B] a side view showing the outer member
[Fig. 3C] a cross-sectional view showing the outer member taken along the arrow C-C of Fig. 3A
[Fig. 4A] showing a state before the inner member is attached to the outer member and a cross-sectional view taken along the arrow A-A of Fig. 2A and taken along a width direction of an operation wall
[Fig. 4B] showing a state before the inner member is attached to the outer member and a cross-sectional view taken along the arrow B-B of Fig. 2A and taken along a thickness direction of an operation wall
[Fig. 5A] an explanation view showing a provisionally locked state of the outer member and the inner member in a state where a projection portion of an engagement piece of the outer member is engaged with an engagement groove of the inner member and a cross-sectional view taken along the arrow A-A of Fig. 2A and taken along a width direction of the operation wall
[Fig. 5B] an explanation view showing a provisionally locked state of the outer member and the inner member in a state where a projection portion of an engagement piece of the outer member is engaged with an engagement groove of the inner member and a cross-sectional view taken along the arrow B-B of Fig. 2A and taken along a thickness of the operation wall
[Fig. 6A] an explanation view showing a state where the provisionally locked inner member and outer member are inserted into an attachment hole of an attachment receiving member and a cross-sectional view taken along the arrow A-A of Fig. 2A and taken along a width direction of the operation wall
[Fig. 6B] an explanation view showing a state where the provisionally locked inner member and outer member are inserted into an attachment hole of an attachment receiving member and a cross-sectional view taken along the arrow B-B of Fig. 2A and taken along a thickness direction of the operation wall
[Fig. 7A] an explanation view showing a state where the projection portion of the engagement piece of the outer member is engaged with the engagement hole of the inner member such that the outer member and the inner member are locked with each other and the attachment member is attached to the attachment receiving member, a cross-sectional view taken along the arrow A-A of Fig. 2A and taken along a width direction of the operation wall
[Fig. 7B] an explanation view showing a state where the projection portion of the engagement piece of the outer member is engaged with the engagement hole of the inner member such that the outer member and the inner member are locked with each other and the attachment member is attached to the attachment receiving member, a cross-sectional view taken along the arrow B-B of Fig. 2A and taken along a thickness direction of the operation wall
[Fig. 8A] an explanation view showing a state where a tool is started to be inserted into an operation hole of the inner member and a cross-sectional view taken along the arrow A-A of Fig. 2A
[Fig. 8B] an explanation view showing a state where a tool is started to be inserted into an operation hole of the inner member and a cross-sectional view taken along the arrow B-B of Fig. 2A
[Fig. 9A] an explanation view showing a state where the tool is further inserted into an engagement hole from the state shown by Fig. 8 such that the engagement of the engagement piece and the engagement hole is released and the locked state is released and a cross-sectional view taken along the arrow A-A of Fig. 2A
[Fig. 9B] an explanation view showing a state where the tool is further inserted into an engagement hole from the state shown by Fig. 8 such that the engagement of the engagement piece and the engagement hole is released and the locked state is released and a cross-sectional view taken along the arrow B-B of Fig. 2A
[Fig. 10A] an explanation view showing a state where the inner member is separated from an attachment receiving member with the attachment member according to the releasing of the locked state and a cross-sectional view taken along the arrow A-A of Fig. 2A
[Fig. 10B] an explanation view showing a state where the inner member is separated from an attachment receiving member with the attachment member according to the releasing of the locked state and a cross-sectional view taken along the arrow B-B of Fig. 2A
[Fig. 11A] an explanation view showing a state where the inner member is further separated from the attachment receiving member from the state shown by Fig. 10 so as to return to the provisionally locked state and a cross-sectional view taken along the arrow A-A of Fig. 2A
[Fig. 11B] an explanation view showing a state where the inner member is further separated from the attachment receiving member from the state shown by Fig. 10 so as to return to the provisionally locked state and a cross-sectional view taken along the arrow B-B of Fig. 2A
[Fig. 12A] an explanation view showing a state where the outer member is removed from the attachment hole of the attachment receiving member with maintaining the provisionally locked state of the inner member and the outer member and a cross-sectional view taken along the arrow A-A of Fig. 2A
[Fig. 12B] an explanation view showing a state where the outer member is removed from the attachment hole of the attachment receiving member with maintaining the provisionally locked state of the inner member and the outer member and a cross-sectional view taken along the arrow B-B of Fig. 2A

### EXPLANATION OF REFERENCES

- 1: clip
- 2: inner member
- 3: outer member
- 4: attachment member
- 7: operation wall
- 8: thin plate portion
- 9: slanted cam portion
- 10: flat plate wall portion
- 11: engagement groove
- 12: engagement hole
- 14: peripheral wall
- 15: bottom portion
- 16: insertion portion
- 17: engagement piece
- 18: engagement piece
- 19: first projection
- 21: attachment receiving member
- 22: attachment hole
- 32: operation hole
- 33: tool

### BEST MODE FOR CARRYING OUT THE INVENTION

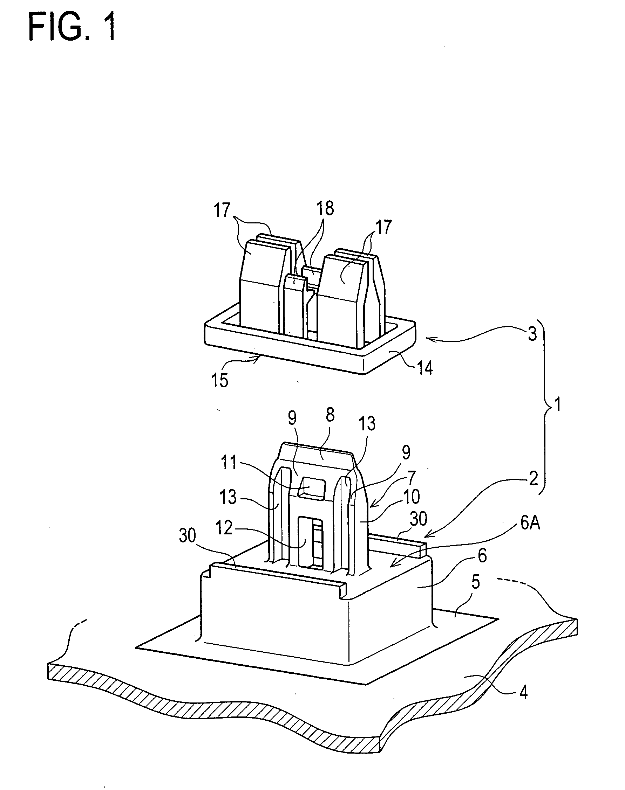

Hereinafter, a clip according to the present invention will be described in detail with reference to the drawings based on an embodiment which has embodied the present invention. First, an entire structure related to a clip according to this embodiment will be explained with reference to Fig. 1. Fig. 1 is an exploded view schematically showing an inner member and an outer member which form the clip according to a first embodiment.
In Fig. 1, the clip 1 basically comprised of the inner member 2 and the outer member 3.

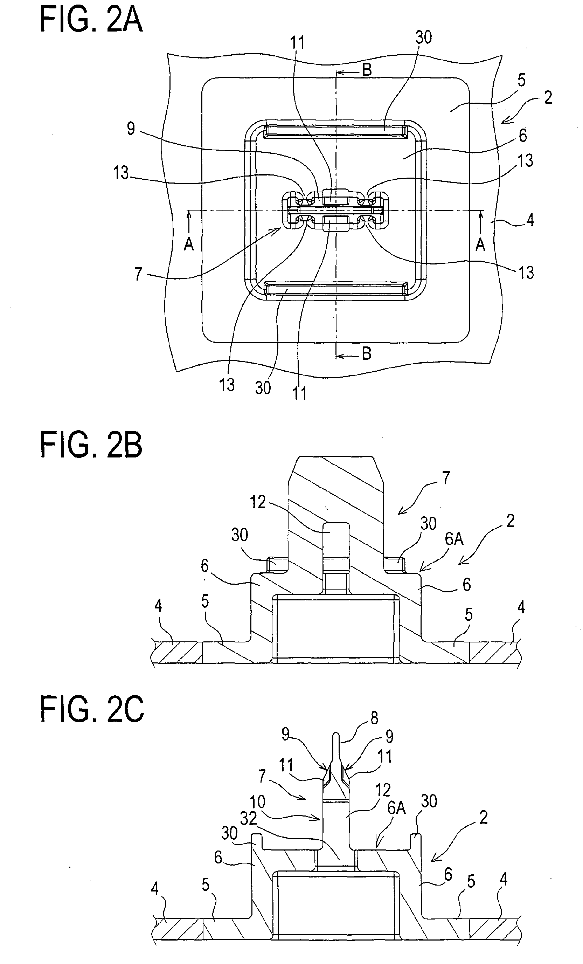

A configuration of the inner member 2 will be explained with reference to Fig. 1 and Figs. 2A to 2C. Figs. 2A to 2C are explanation views showing the inner member in different ways. Fig. 2A is a plane view of the inner member, Fig. 2B is a cross-sectional view of the inner member taken along A-A line of Fig. 2A, and Fig. 2C is a cross-sectional view of the inner member taken along B-B line of Fig. 2A.

In Figs. 1 and 2A to 2C, the inner member 2 is made of various kinds of resins such as polypropylene and integrally molded with an attachment member 4 such as a console box and instrumental panel. The inner member 2 is provided on one surface of the attachment member (an upper surface in Fig. 1) and has a flat plate portion 5 which is integrally molded with the attachment member 4 with various molding methods. The flat plate portion 5 has a base body 6 which is formed in a box. An operation wall 7 extends from a substantially center of an upper surface of the base body 6. A pair of walls 30 extend from side peripheries of the upper wall 6A of the base body 6 so as to face with each other.

The operation wall 7 includes a thin plate portion 8, two slanted cam portions 9 and a flat plate wall portion 10 in this order from its distal end. The slanted cam portions 9 are formed in a tower-like shape and continuously formed downwardly from the thin plate portion 8. The flat plate wall portion 10 is continuously formed from each of the slanted cam portions 9. An engagement groove 11 is formed on each slanted cam portion 9. Further, an elongated engagement hole 12 is formed at a substantially center of the flat plate wall portion 10 in width direction and next to the engagement groove 11. The engagement groove 11 and the engagement hole 12 are engaged with engagement projections (described later) of the outer member 3 successively according to an insertion degree of the operation wall 7 with respect to the outer member 3.
Two reinforcing grooves 13 are formed on both sides with respect to the engagement groove 11 and the engagement hole 12. The reinforcing grooves 13 are formed on both sides of the operation wall 7. Each of the reinforcing grooves 13 is provided for improving strength of the operation wall 7.
An operation hole 32 is formed on the upper wall 6A of the base body 6 so as to correspond to a lower portion of the engagement hole of the operation wall 7 and the operation hole 32 extends through the upper wall 6A and communicates with the engagement hole 12.

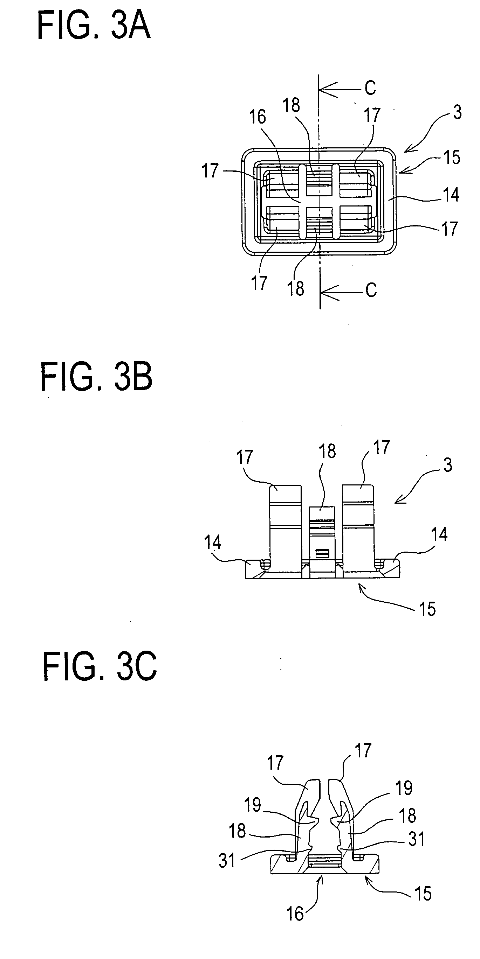

Next, the outer member 3 will be explained with reference to Fig. 1 and Figs. 3A to 3C. Figs. 3A to 3C are explanation views showing the outer member in different ways. Fig. 3A is a plane view of the outer member, Fig. 3B is a side view of the outer member, and Fig. 3C is a cross-sectional view of the outer member taken along a C-C line of Fig. 3A.

The outer member 3 is integrally formed from various resins, for example, polypropylene. The outer member 3 includes a bottom portion 15 having a peripheral wall 14. An insertion portion 16 is formed at a substantially center of the bottom portion 15 with respect to a width direction. As described below, the operation wall 7 of the inner member is inserted into the insertion portion 16. Further, on both sides of the insertion portion 16, two pairs of (four) engagement pieces 17 are extended from an upper surface of the bottom portion 15 . Each of the engagement pieces 17 is elastically deformable outwardly as the operation wall 7 is inserted into the insertion portion 16.

On both sides of the insertion portion 16 and between the engagement pieces 17 along a longitudinal direction of the bottom portion 15, a pair of engagement pieces 18 are extended from the upper surface of the bottom portion 15. The engagement pieces 18 are elastically deformable. A first projection 19 and a second projection 31 (refer to Fig. 3C) are formed on each engagement piece 18. Each of the first projections 19 is elastically engaged with the engagement groove 11 and the engagement hole 12 which are formed on the operation wall 7 of the inner member 2. Each of the second projections 31 is engaged with the engagement hole 12 while the first projection 19 being engaged with the engagement groove 11.

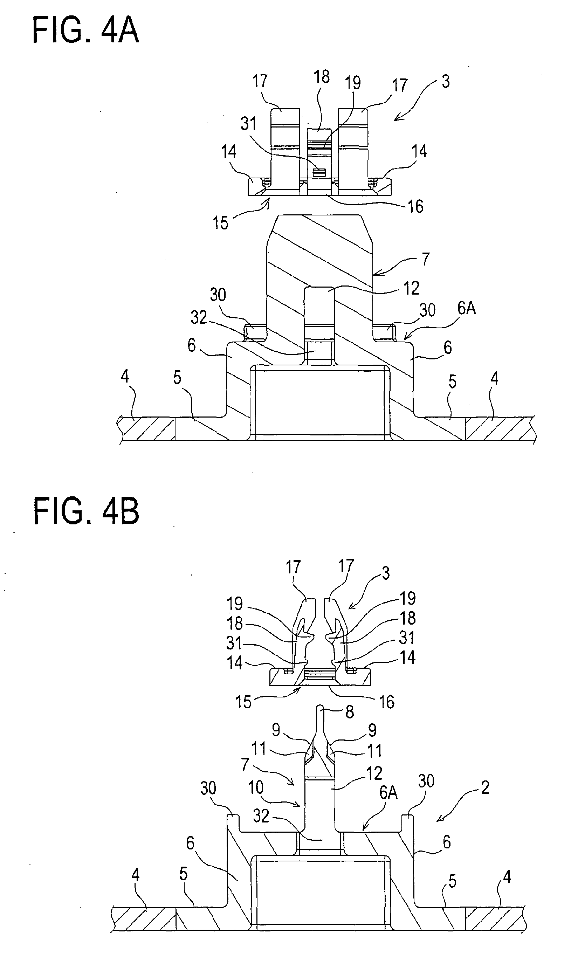

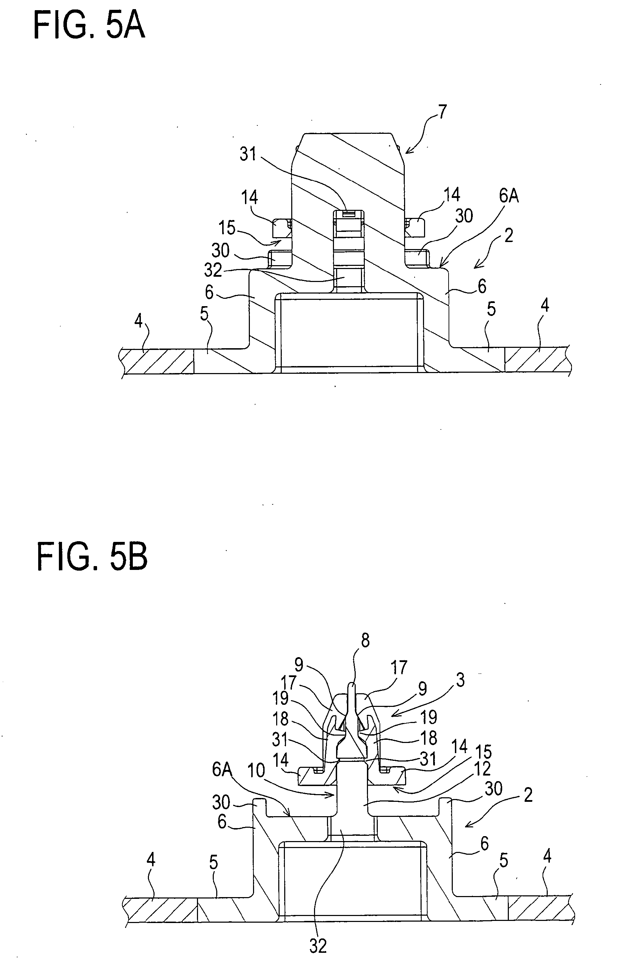

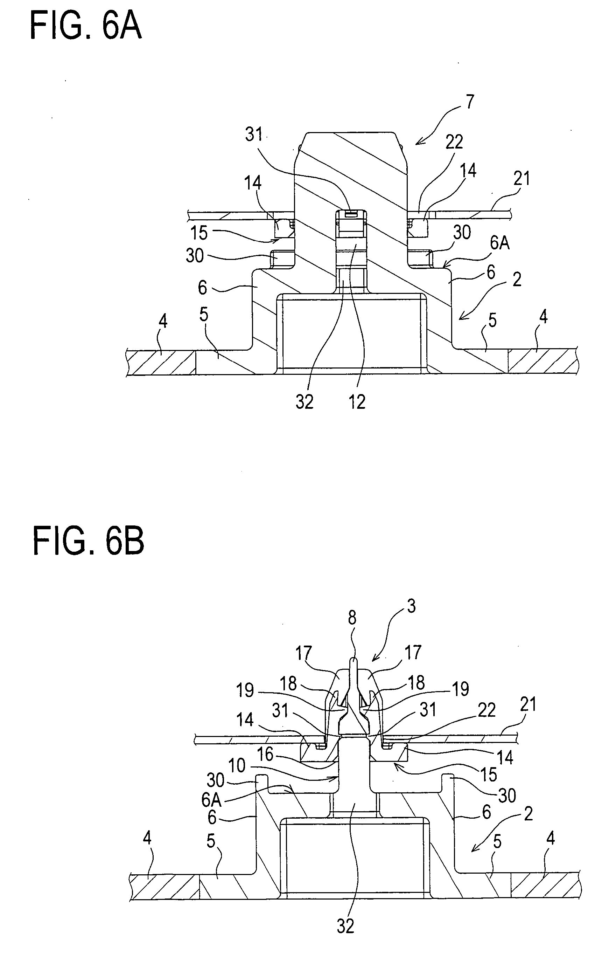

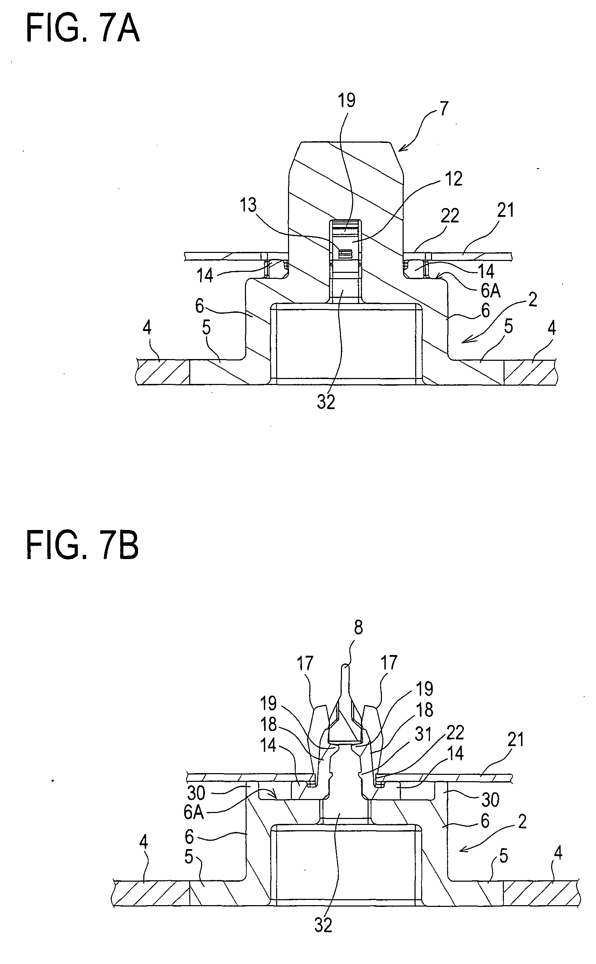

A method for attaching the attachment member 4 to the attachment receiving member, which is a metal plate (body) of a vehicle body, via the clip 1 which is comprised of the inner member 2 and the outer member 3 will be explained with reference to Figs. 4 to 7. Figs. 4A and 4B show a state before the inner member is attached to the outer member, Fig. 4A is a cross-sectional view taken along an A-A line of Fig. 2A, which is taken along a width direction of the operation wall, Fig. 4B is a cross-sectional view taken along an B-B line of Fig. 2A, which is taken along a thickness direction of the operation wall, Figs. 5A and 5B are explanation views showing a provisionally locked state of the outer member and the inner member in a state where a projection of an engagement piece of the outer member is engaged with an engagement groove of the inner member. Fig. 5A is a cross-sectional view taken along the arrow A-A of Fig. 2A and taken along a width direction of the operation wall and Fig. 5B is a cross-sectional view taken along the arrow B-B of Fig. 2A and taken along a thickness of the operation wall. Figs. 6A and 6B are explanation views showing a state where the provisionally locked inner member and outer member are inserted into an attachment hole of an attachment receiving member. Fig. 6A is a cross-sectional view taken along the arrow A-A of Fig. 2A and taken along a width direction of the operation wall and Fig. 6B is a cross-sectional view taken along the arrow B-B of Fig. 2A and taken along a thickness direction of the operation wall. Figs. 7A and 7B are explanation views showing a state where the projection of the engagement piece of the outer member is engaged with the engagement hole of the inner member such that the outer member and the inner member are locked with each other and the attachment member is attached to the attachment receiving member. Fig. 7A is a cross-sectional view taken along the arrow A-A of Fig. 2A and taken along a width direction of the operation wall and Fig. 7B is a cross-sectional view taken along the arrow B-B of Fig. 2A and taken along a thickness direction of the operation wall.

In attaching the attachment member 4 to the attachment receiving member with using the clip 1 according to this embodiment, as shown in Figs. 4A and 4B, the operation wall 7 of the inner member 2 is located so as to correspond to the insertion portion 16 of the outer member 3. Then, the outer member 3 is moved toward the insertion portion 16 such that the operation wall 7 of the inner member is inserted into the insertion portion 16. Thereby, the first projection 19 formed on each engagement piece 18 of the outer member 3 is engaged with the engagement groove 11 of the operation wall 7, and the second projection 31 is engaged with the engagement hole 12. At this time, each engagement piece 17 is contacted to the both sides of the thin plate portion 8 of the operation wall 7. Figs. 5A and 5B show this state.

As shown in Figs. 5A and 5B, in a state where the first projection 19 formed on each engagement piece 18 of the outer member 3 is engaged with the engagement groove 11 on the operation wall 7 and the second projection 31 is engaged with the engagement hole 12, each engagement piece 17 is only contacted to both surfaces of the thin plate portion 8 of the operation wall 7 without receiving the cam operation due to each slanted cam member 9 of the operation wall 7 of the inner member 2. Therefore, each engagement piece 17 maintains substantially its original state without being elastically deformed. In a state where each engagement piece 17 of the outer member 3 does not receive the cam operation due to each slanted cam member 9, the first projection 19 of the engagement piece 18 is engaged with the engagement groove 11 and the second projection 31 is engaged with the engagement hole 12 such that the inner member 2 and the outer member 3 are provisionally locked with each other. Accordingly, the inner member 2 and the outer member 3 which are attached to the attachment member 4 can be always handled integrally with each other.

Then, in the provisionally locked state in which the outer member 3 is provisionally locked to the inner member 2 as described above, the attachment member 4 is pressed from its surface which is opposite to a surface of the attachment member 4 where the inner member 2 is provided such that the outer member 3 and the inner member 2 are inserted into the attachment hole 22 of the attachment receiving member 21. This insertion operation is executed until the upper surface of the peripheral wall portion 14 formed,on the bottom portion 15 of the outer member 3 abuts against the rear surface of the peripheral edge of the attachment hole 22 of the attachment receiving member 21. This state is shown in Figs. 6A and 6B. In the state shown in Figs. 6A and 6B, the first projection 19 of each engagement piece 18 of the outer member 3 is engaged with the engagement groove 11 on the operation wall 7 of the inner member 2, the second projection 31 is engaged with the engagement hole 12, and the upper surface of the peripheral wall 14 of the bottom portion 15 of the outer member 3 abuts against the rear surface of the peripheral edge of the attachment hole 22 of the attachment receiving member 21.

From the state shown in Figs. 6A and 6B, the attachment member 4 is pressed toward in a direction in which the outer member 3 and the inner member 2 are further inserted into the attachment hole 22 (in the upper direction in Fig. 6). At this time, since the upper surface of the peripheral wall portion 14 of the outer member 3 contacts the peripheral edge of the attachment hole of the attachment receiving member 21, the outer member 3 is not moved when the attachment member 4 being pressed.

The operation wall 7 of the inner member 2 is inserted into the attachment hole 22 toward the attachment receiving member 21. According to this insertion operation, each engagement piece 17 of the outer member 3 gradually receives the cam operation due to each slanted cam portion 9 of the operation wall 7 of the inner member 2 so as to be elastically deformed outwardly. When each engagement piece 17 is further elastically deformed outwardly by the cam operation due to the slanted cam portion 9, the first projection 19 of each engagement projection 18 is engaged with the engagement hole 12 of the operation wall of the inner member 2. This state is shown in Figs. 7A and 7B.

In the state shown in Figs. 7A and 7B, the first projection 19 of each engagement piece 18 of the outer member 3 is engaged with the engagement hole 12 of the operation wall 7 of the inner member. The upper surface of the peripheral wall of the bottom portion 15 of the outer member 3 abuts against the rear surface of the attachment receiving member 21. Further, the upper surface of each wall portion 30 formed on the upper surface of the base body 6 of the inner member 2 abuts against the rear surface of the attachment receiving member 21.
Thereby, the inner member 2 and the outer member 3 are locked and the attachment member 4 is attached to the attachment receiving member 21.

As described above, in a state in which the first projection 19 of each engagement piece 18 of the outer member 3 is engaged with the engagement groove 11 and the outer member 3 is inserted into the attachment hole 22 of the attachment receiving member 21 and the peripheral wall 14 of the bottom portion 15 abuts against the peripheral portion of the attachment hole 22, the attachment member 4 is pressed from its surface opposite to one where the inner member 2 is provided toward the attachment receiving member 21. Thereby, the first projection 19 of each engagement piece 18 is engaged with the second engagement hole in the locked state while each engagement piece 17 receiving the cam operation due to each slanted cam portion 9 so as to be elastically deformed outwardly. Therefore, in order to attach the attachment member 4 to the attachment receiving member 21, after the inner member 2 and the outer member 3 which are maintained in the provisionally locked state are inserted into the attachment hole 22 of the attachment receiving member 21 such that the clip 1 is supported by the attachment receiving member 21, the inner member 2 is pressed toward the attachment receiving member 21 with the attachment member 4 such that the operation wall 7 is further inserted into the insertion portion 16 of the outer member 3. This simple operation enables the attachment member 4 to be attached to the attachment receiving member 21 via the outer member 3 and the inner member 2 of the clip 1.

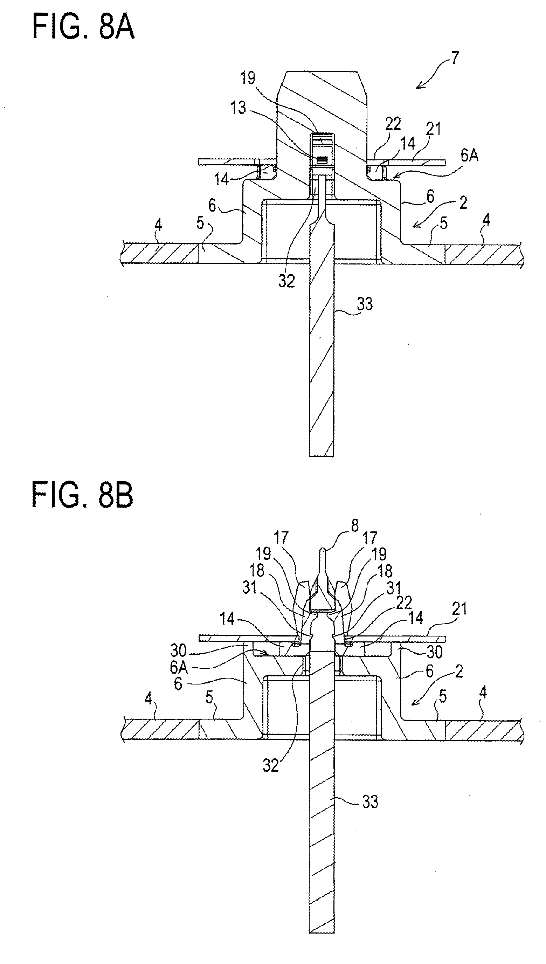

The inner member 2 and the outer member are locked with each other when the attachment member 4 is attached to the attachment receiving member 21. An operation for releasing the locked state and recovering the provisionally locked state and removing the clip 1 from the attachment receiving member 21 will be explained with reference to Figs. 8 to 12.

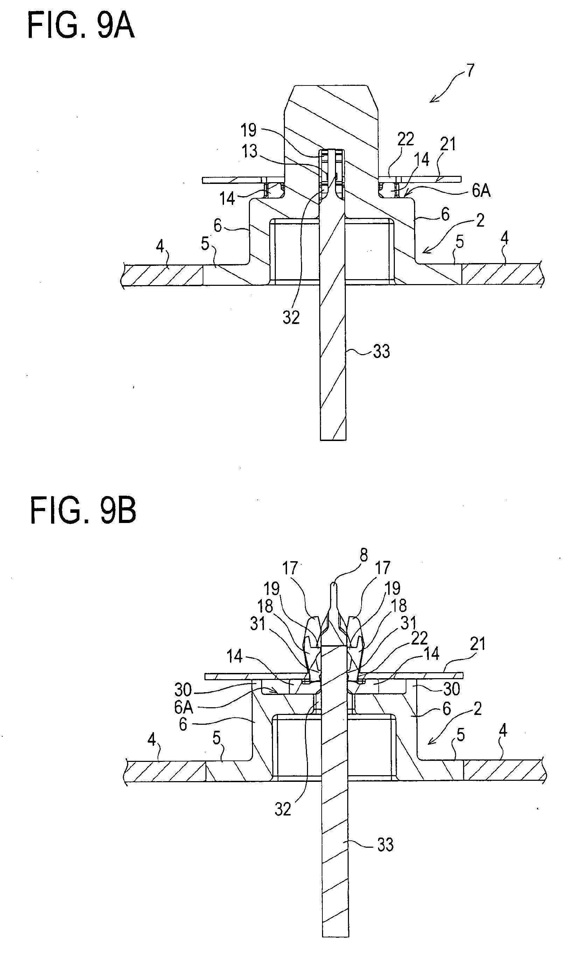

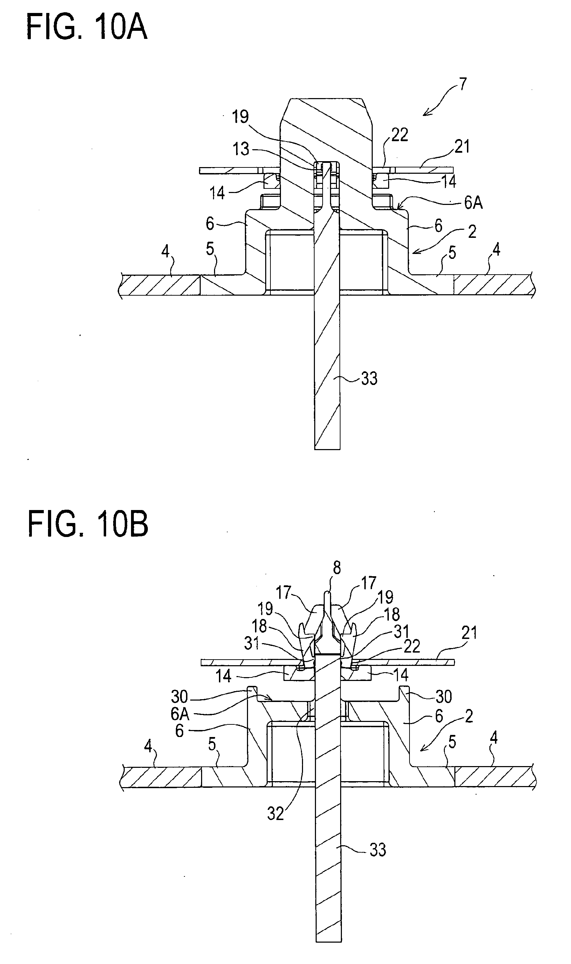

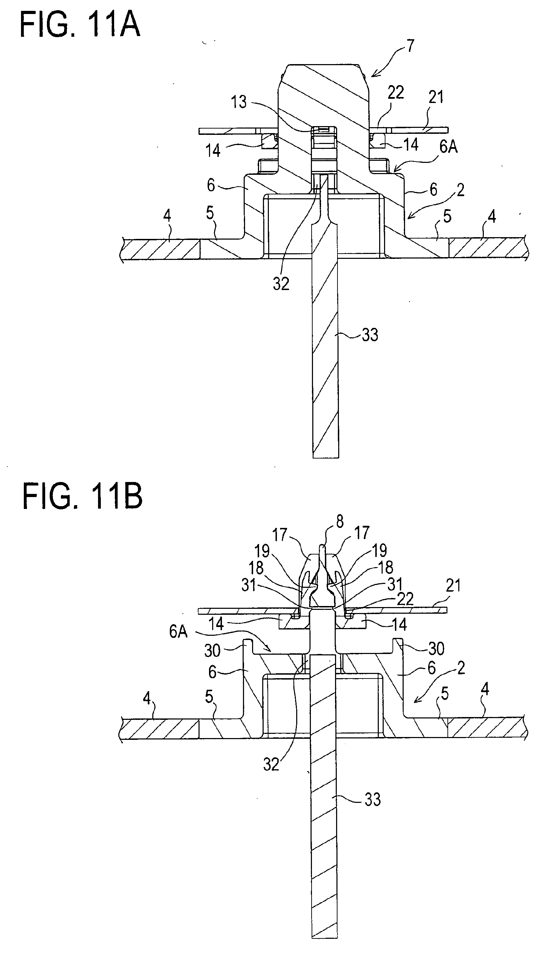

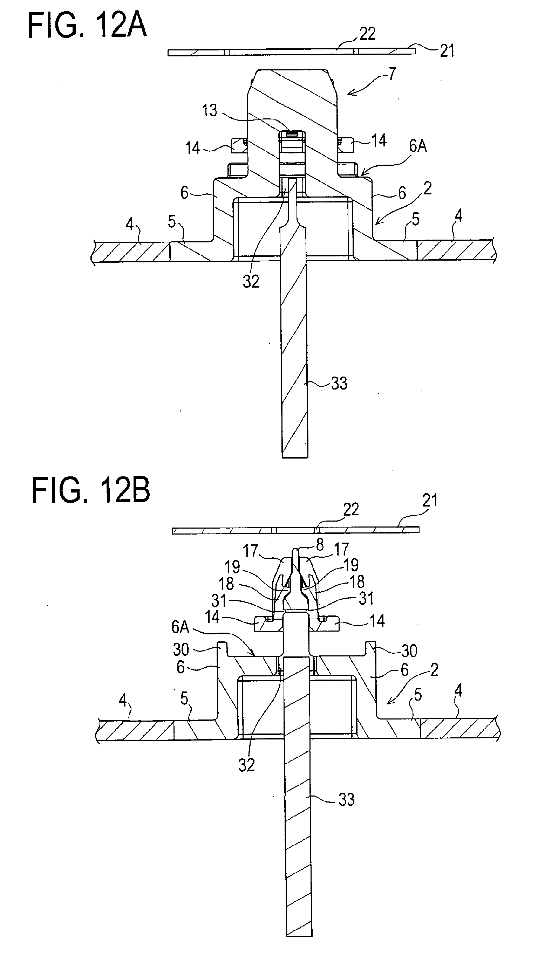

Figs. 8A and 8B are explanation views showing a state where a tool is started to be inserted into an operation hole of the inner member. Fig. 8A is a cross-sectional view taken along the arrow A-A of Fig. 2A and Fig. 8B is a cross-sectional view taken along the arrow B-B of Fig. 2A. Figs. 9A and 9B are explanation views showing a state where the tool is further inserted into an engagement hole from the state shown by Figs. 8A and 8B such that the engagement of the engagement piece and the engagement hole is released and the locked state is released. Fig. 9A is a cross-sectional view taken along the arrow A-A of Fig. 2A and Fig. 9B is a cross-sectional view taken along the arrow B-B of Fig. 2A. Figs. 10A and 10B are explanation views showing a state where the inner member is separated from an attachment receiving member with the attachment member according to the releasing of the locked state. Fig. 10A is a cross-sectional view taken along the arrow A-A of Fig. 2A and Fig. 10B is a cross-sectional view taken along the arrow B-B of Fig. 2A. Figs. 11A and 11B are explanation views showing a state where the inner member is further separated from the attachment receiving member from the state shown by Figs. 10A and 10B so as to return to the provisionally locked state. Fig. 11A is a cross-sectional view taken along the arrow A-A of Fig. 2A and Fig. 11B is a cross-sectional view taken along the arrow B-B of Fig. 2A. Figs. 12A and 12B are explanation views showing a state where the outer member is removed from the attachment hole of the attachment receiving member with maintaining the provisionally locked state of the inner member and the outer member. Fig. 12A is a cross-sectional view taken along the arrow A-A of Fig. 2A and Fig. 12B is a cross-sectional view taken along the arrow B-B of Fig. 2A.

First, when the attachment member 4 is attached to the attachment receiving member 21, the inner member 2 and the outer member 3 are locked with each other as shown in Figs. 7A and 7B. In the locked state, as shown in Fig. 7B, the first projection 19 and the second projection 31 of each engagement piece 18 are located in the operation hole 32.

In the locked state, as shown in Figs. 8A and 8B, a tool 33 such as a driver is inserted into the operation hole 32 of the inner member 2 from a side of the inner member 2 opposite to a side where the operation wall 7 is formed. As the tool 33 is inserted into the operation hole 32, a side edge of the tool 33 contacts the second projection 31 and then contacts the first projection 19. Accordingly, the engagement piece 18 is elastically deformed so as to be expanded outwardly. When the engagement piece 18 is thus elastically deformed, the engagement of the first projection 19 of the engagement piece 18 and the engagement hole 12 is released. This releases the locked state. This state is shown in Figs. 9A and 9B.

In a state where the locked state is released, as the tool 33 is pulled in a direction opposite to the inserting direction with respect to the operation hole 32, the inner member 2 is separated from the attachment receiving member 21 with the tool 33. This state is shown in Figs. 10A and 10B.

If the tool 33 is further pulled from the state shown in Figs. 10A and 10B, the inner member 2 is further separated from the attachment receiving member 21 with the tool 33. Accordingly, the first projection 19 of the engagement piece 18 is engaged with the engagement groove 11 of the operation wall 7 and the second projection 31 of the engagement piece 18 is engaged with the engagement hole 12. This enables the inner member 2 and the outer member 3 to be provisionally locked state. This state is shown in Figs. 11A and 11B.

Thereafter, the outer member 3 is removed from the attachment hole 22 of the attachment receiving member 21 with maintaining the provisionally locked state of the inner member 2 and the outer member 3 shown in Figs. 11A and 11B.

As explained before, according to the clip 1 of the present embodiment, in the locked state of the inner member 2 and the outer member 3, the first projection and the second projection 31 of each engagement piece 18 are located in the operation hole 32. When the tool 33 is inserted from the operation hole 32 formed on the inner member 2 in the locked state, the side edge of the tool 33 contacts the first projection 19 and the engagement piece 18 is elastically deformed and this releases the engagement of the first projection 19 of the engagement piece 18 and the engagement hole 12 to release the locked state. When the tool 33 is pulled in a direction opposite to the insertion direction with respect to the operation hole 32, the first projection 19 of the engagement piece 18 is engaged with the engagement groove 11 of the operation wall 7 and the second projection of the engagement piece 18 is engaged with the engagement hole 12 such that the inner member 2 and the outer member 3 are in a provisionally locked state. Therefore, according to the clip of the present embodiment, the attachment member 4 can be removed from the attachment receiving member 21 with a quite simple operation.

The present invention is not limited to the illustrated embodiment. It is a matter of course that various improvements and modifications are possible as far as not departing from the spirit of the present invention.

The present invention provides a clip which enables attachment of the attachment member to the attachment receiving member in an extremely easy one-touch operation in a state where the inner member and the outer member, which form the clip, are always handled integrally with each other in a provisionally locked state.

## Claims

1. A clip comprising:
an inner member provided on an attachment member and having a base body and an operation wall extended from an upper wall of the base body; and
an outer member having an insertion portion where the operation wall of the inner member is inserted and having an engagement piece which elastically deforms as the operation wall of the inner member is inserted into the insertion portion, wherein the outer member is inserted into an attachment hole of an attachment receiving member and the operation wall of the inner member is inserted into the insertion portion of the outer member such that the engagement piece of the outer member is elastically deformed and the attachment member is attached to the attachment receiving member, the clip being
**characterized in that**:
the inner member has an engagement groove formed on the operation wall, an engagement hole formed next to the engagement groove and an operation hole penetrating the upper wall of the base body and being communicated with the engagement hole,
wherein the outer member has a projection formed next to the engagement piece,
wherein the engagement piece is engaged with the engagement groove in a first state where the operation wall of the inner member is inserted into the insertion portion of the outer member and the engagement piece is engaged with the engagement hole in a second state
where the operation wall is further inserted into the insertion portion, and
wherein the projection engaged with the engagement hole in the second state is located in the operation hole and is capable of releasing the engagement with the engagement hole if a tool is inserted from the operation hole.

2. The clip according to claim 1, being **characterized in that**:
a slanted cam portion is formed at one end of the operation wall of the inner member, and the engagement piece does not receive a cam operation due to the slanted cam portion in the first state.

3. The clip according to claim 2, being **characterized in that**:
a thin plate portion is formed at a distal end of the slanted cam portion, and the engagement piece contacts the thin plate portion in the first state.
